# FASCICULE DE BREVET EUROPEEN

(11) **EP 1 043 678 B1**
(45) Date de publication et mention de la délivrance du brevet: **07.01.2009**
(21) Numéro de dépôt: 00410031.9
(22) Date de dépôt: 06.04.2000
(51) Int. Cl.: G06K 7/00

(54) **Transmission en duplex dans un système de transpondeurs électromagnétiques**
Duplexübertragung in einem elektromagnetischen Transponder-System
Duplex transmission in an electromagnetic transponder system

(30) Priorité: 07.04.1999 FR 9904549
(43) Date de publication de la demande: 11.10.2000
(73) Titulaire: STMicroelectronics S.A., 92120 Montrouge (FR)
(72) Inventeur: Wuidart, Luc, 83910 Pourrieres (FR); Bardouillet, Michel, 13790 Rousset (FR); Enguent, Jean-Pierre, 13119 Saint Savournin (FR)
(74) Mandataire: de Beaumont, Michel

(56) Documents cités:
- EP-A- 0 768 540
- US-A- 4 963 887
- US-A- 5 521 602

## Description

La présente invention concerne des systèmes utilisant des transpondeurs électromagnétiques, c'est-à-dire des émetteurs-récepteurs (généralement mobiles) susceptibles d'être interrogés, sans contact et sans fil, par une unité (généralement fixe), dite borne de lecture et/ou d'écriture. L'invention concerne, plus particulièrement, des transpondeurs dépourvus d'alimentation autonome. Ces transpondeurs extraient l'alimentation nécessaire aux circuits électroniques qu'ils comportent du champ haute fréquence rayonné par une antenne de la borne de lecture et d'écriture. L'invention s'applique à de tels transpondeurs, qu'il s'agisse de transpondeurs à lecture seule, c'est-à-dire propres à fonctionner avec une borne se contentant de lire les données du transpondeur, ou à des transpondeurs à lecture-écriture qui contiennent des données qui peuvent être modifiées par la borne.

Les transpondeurs électromagnétiques sont basés sur l'emploi de circuits oscillants comprenant un enroulement formant antenne, côté transpondeur et côté borne de lecture-écriture. Ces circuits sont destinés à être couplés par champ magnétique proche lorsque le transpondeur entre dans le champ de la borne de lecture-écriture. La portée d'un système à transpondeur, c'est-à-dire la distance maximale de la borne à laquelle un transpondeur est activé (réveillé) dépend, notamment, de la taille de l'antenne du transpondeur, de la fréquence d'excitation de la bobine du circuit oscillant engendrant le champ magnétique, de l'intensité de cette excitation, et de la consommation en puissance du transpondeur.

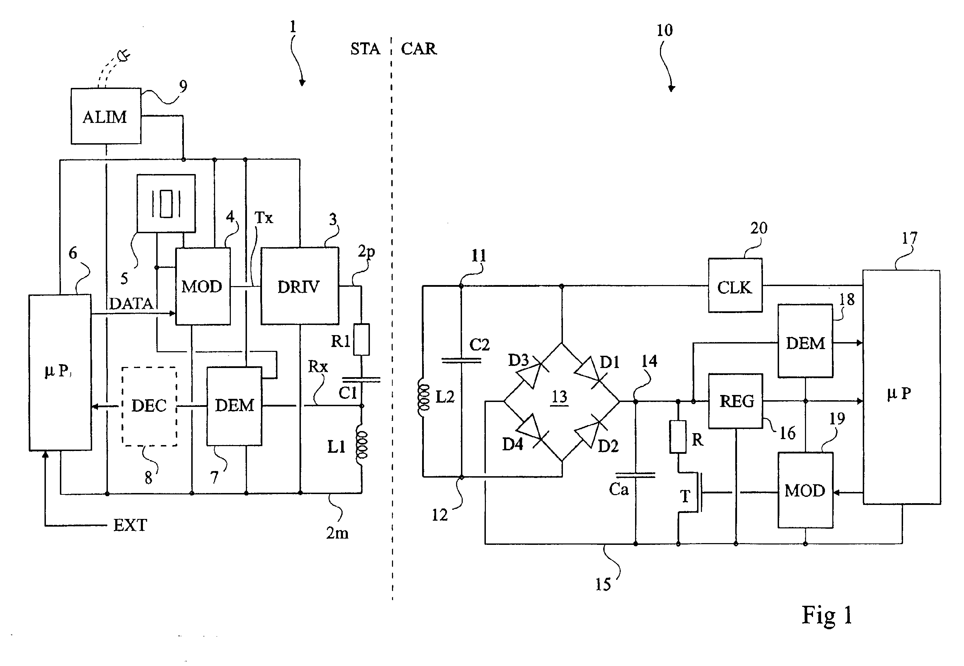

La figure 1 représente, de façon très schématique et fonctionnelle, un exemple classique de système d'échange de données entre une borne 1 de lecture-écriture (STA) et un transpondeur 10 (CAR).

Généralement, la borne 1 est essentiellement constituée d'un circuit oscillant formé d'une inductance L1, en série avec un condensateur C1 et une résistance R1, entre une borne 2p de sortie d'un amplificateur ou coupleur d'antenne 3 (DRIV) et une borne 2m à un potentiel de référence (généralement, la masse). L'amplificateur 3 reçoit un signal Tx de transmission haute fréquence, issu d'un modulateur 4 (MOD). Le modulateur reçoit une fréquence de référence, par exemple d'un oscillateur à quartz 5 et, si besoin, un signal DATA de données à transmettre. En l'absence de transmission de données de la borne 1 vers le transpondeur 10, le signal Tx sert uniquement de source d'énergie pour activer le transpondeur si celui-ci passe dans le champ. Les données à transmettre proviennent généralement d'un système numérique, par exemple, un microprocesseur 6 (µP).

Le point de connexion du condensateur C1 et de l'inductance L1 constitue, dans l'exemple représenté à la figure 1, une borne de prélèvement d'un signal Rx de données, reçues d'un transpondeur 10 à destination d'un démodulateur 7 (DEM). Une sortie du démodulateur communique (le cas échéant par l'intermédiaire d'un décodeur (DEC) 8) les données reçues du transpondeur 10 au microprocesseur 6 de la borne de lecture-écriture 1. Le démodulateur 7 reçoit, généralement de l'oscillateur 5, un signal d'horloge ou de référence pour une démodulation de phase. Le cas échéant, la démodulation est effectuée à partir d'un signal prélevé entre le condensateur C1 et la résistance R1, et non aux bornes de l'inductance L1. Le microprocesseur 6 communique (bus EXT) avec différents circuits d'entrée/sortie (clavier, écran, moyen de transmission vers un serveur, etc.) et/ou de traitement. Les circuits de la borne de lecture-écriture tirent l'énergie nécessaire à leur fonctionnement d'un circuit d'alimentation 9 (ALIM) raccordé, par exemple, au réseau de distribution électrique.

Côté transpondeur 10, une inductance L2, en parallèle avec un condensateur C2, forme un circuit oscillant parallèle (appelé circuit résonant en réception), destiné à capter le champ magnétique engendré par le circuit oscillant série L1C1 de la borne 1. Le circuit résonant (L2C2) du transpondeur 10 est accordé sur la fréquence de résonance du circuit oscillant (L1C1) de la borne 1.

Les bornes 11, 12 du circuit résonant L2C2 qui correspondent aux bornes du condensateur C2, sont reliées à deux bornes d'entrée alternative d'un pont redresseur 13 constitué, par exemple, de quatre diodes D1, D2, D3, 24. Dans la représentation de la figure 1, l'anode de la diode D1 est connectée à la borne 11, de même que la cathode de la diode D3. L'anode de la diode D2 et la cathode de la diode 24 sont connectées à la borne 12. Les cathodes des diodes D1 et D2 constituent une borne positive 14 de sortie redressée. Les anodes des diodes D3 et 24 constituent une borne de référence 15 de la tension redressée. Un condensateur Ca est connecté aux bornes de sortie redressée 14, 15 du pont 13 de façon à stocker de l'énergie et à lisser la tension redressée délivrée par le pont. On notera que le pont de diodes peut être remplacé par un montage de redressement monoalternance.

Quand le transpondeur 10 se trouve dans le champ de la borne 1, une tension haute fréquence est engendrée aux bornes du circuit résonant L2C2. Cette tension, redressée par le pont 13 et lissée par le condensateur Ca, fournit une tension d'alimentation à des circuits électroniques du transpondeur par l'intermédiaire d'un régulateur de tension 16 (REG). Ces circuits comprennent généralement, essentiellement, un microprocesseur (µP) 17 (associé à une mémoire non représentée), un démodulateur 18 (DEM) des signaux éventuellement reçus de la borne 1, et un modulateur 19 (MOD) pour transmettre des informations à la borne 1. Le transpondeur est généralement synchronisé au moyen d'une horloge (CLK) extraite, par un bloc 20, du signal haute fréquence récupéré aux bornes du condensateur C2, avant redressement. Le plus souvent, tous les circuits électroniques du transpondeur 10 sont intégrés dans une même puce.

Pour transmettre des données du transpondeur 10 vers la borne 1, le modulateur 19 commande un étage de modulation (rétromodulation) du circuit résonant L2C2. Cet étage de modulation est généralement constitué d'un interrupteur électronique (par exemple, un transistor T) et d'une résistance R, en série entre les bornes 14 et 15. Le transistor T est commandé à une fréquence (par exemple, 847,5 kHz) dite sous-porteuse, nettement inférieure (généralement avec un rapport d'au moins 10) à la fréquence du signal d'excitation du circuit oscillant de la borne 1 (par exemple, 13,56 MHz). Lorsque l'interrupteur T est fermé, le circuit oscillant du transpondeur est soumis à un amortissement supplémentaire par rapport à la charge constituée des circuits 16, 17, 18, 19 et 20, de sorte que le transpondeur prélève une quantité d'énergie plus importante du champ magnétique haute fréquence. Côté borne 1, l'amplificateur 3 maintient constante l'amplitude du signal d'excitation à haute fréquence. Par conséquent, la variation d'énergie du transpondeur se traduit par une variation d'amplitude et de phase du courant dans l'antenne L1. Cette variation est détectée par le démodulateur 7 de la borne 1 qui est soit un démodulateur de phase, soit un démodulateur d'amplitude. Par exemple, dans le cas d'une démodulation de phase, le démodulateur détecte, dans les demi-périodes de la sous-porteuse où l'interrupteur T du transpondeur est fermé, un léger déphasage (quelques degrés, voire moins d'un degré) de la porteuse du signal Rx par rapport au signal de référence. La sortie du démodulateur 7 (généralement la sortie d'un filtre passe-bande centré sur la fréquence de la sous-porteuse) restitue alors un signal image du signal de commande de l'interrupteur T qui peut être décodé (par le décodeur 8 ou directement par le microprocesseur 6) pour restituer les données binaires.

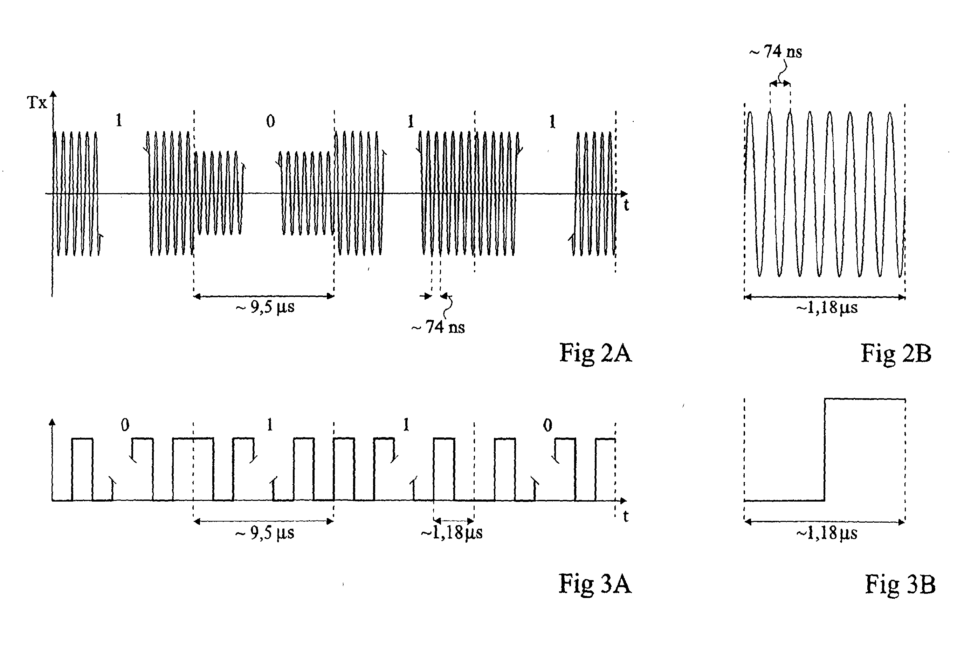

Les figures 2A et 2B illustrent un exemple classique de transmission de données de la borne 1 vers un transpondeur 10. La figure 2A représente un exemple d'allure du signal d'excitation de l'antenne L1 pour une transmission d'un code 1011. La modulation couramment utilisée est une modulation d'amplitude avec un débit de 106 kbit/s (un bit est transmis en environ 9,5 µs) nettement inférieur à la fréquence (par exemple, 13,56 MHz) de la porteuse provenant de l'oscillateur 5 (période d'environ 74 ns). La modulation d'amplitude s'effectue, soit en tout ou rien, soit avec un taux de modulation (défini comme étant la différence des amplitudes crêtes entre les deux états (0 et 1), divisée par la somme de ces amplitudes) inférieur à cent pour cent (100 %) en raison du besoin d'alimentation du transpondeur 10.

Dans l'exemple des figures 2A et 2B, la porteuse à 13,56 MHz est modulée, avec un débit de 106 kbit/s, en amplitude avec un taux de modulation tm de, par exemple, 10 %. Alors, comme cela sera mieux compris en comparant les échelles de temps des figures 2A et 2B, la transmission d'un bit de la borne 1 vers le transpondeur 10 nécessite, avec un tel débit, soixante-quatre alternances de la porteuse. La figure 2B représente huit alternances de la porteuse à 13,56 MHz.

Les figures 3A et 3B illustrent un exemple classique de transmission de données du transpondeur 10 vers la borne 1. La figure 3A illustre un exemple d'allure du signal de commande du transistor T, fourni par le modulateur 19, pour une transmission d'un code 0110. Côté transpondeur, la rétromodulation est généralement de type résistif avec une porteuse (dite sous-porteuse) de, par exemple, 847,5 kHz (période d'environ 1,18 µs). La rétromodulation est, par exemple, basée sur un codage de type BPSK (codage binaire par saut de phase) à un débit de l'ordre de 106 kbit/s nettement inférieur à la fréquence de la sous-porteuse.

La figure 3B illustre les variations de la sous-porteuse pendant un intervalle de temps de même longueur qu'en figure 2B (huit alternances de la porteuse à 13,56 MHz) soit de sensiblement 1,18 µs correspondant à une période de la sous-porteuse.

On notera que, quel que soit le type de modulation ou de rétromodulation utilisée (par exemple d'amplitude, de phase et de fréquence) et quel que soit le type de codage des données (MRZ, MRZi, Manchester, ASK, BPSK, etc...), la transmission s'effectue par saut de valeur binaire.

On notera également que la borne ne transmet pas de données pendant qu'elle en reçoit d'un transpondeur, la transmission de données s'effectuant alternativement dans un sens puis dans l'autre (semi-duplex).

En effet, le procédé classique de transmission décrit précédemment ne permet pas de transmission simultanée du transpondeur vers la borne et de la borne vers le transpondeur. Parmi les problèmes soulevés par un tel procédé bidirectionnel, on peut notamment citer le risque que l'émission par un des éléments du système - borne ou transpondeur - à destination de l'autre élément - transpondeùr ou borne - perturbe le décodage des données reçues de l'autre élément.

Le document EP-A-0 768 540 décrit un système de sélection d'un transpondeur devant communiquer avec une borne, dans lequel un transpondeur est susceptible de communiquer en full-duplex avec la borne en modulation d'amplitude dans le sens transpondeur vers borne.

Le document US-A-4 963 887 décrit un système de communication dans lequel la transmission dans le sens transpondeur vers borne s'effectue en modulation d'amplitude.

La présente invention vise à proposer un nouveau procédé de transmission qui soit bidirectionnel (procédé duplex).

La présente invention vise également à proposer une borne de lecture/écriture utilisable pour mettre en oeuvre tant un procédé classique (semi-duplex) qu'un procédé bidirectionnel (duplex).

La présente invention vise également à proposer un transpondeur propre à mettre en oeuvre tant un procédé de transmission classique qu'un procédé bidirectionnel.

Pour atteindre ces objets, la présente invention prévoit un procédé de transmission selon la revendication 1.

Selon un mode de réalisation de la présente invention, le taux de modulation est inférieur à 50 %.

Selon un mode de réalisation de la présente invention, le procédé consiste, côté borne, à écrêter un signal de référence de la démodulation de phase.

La présente invention prévoit également un système de transmission selon la revendication 4.

La présente invention prévoit également une borne selon la revendication 5 comportant un moyen de comparaison de signaux émis et reçus écrêtés par des moyens d'écrêtage respectifs.

Selon un mode de réalisation de la présente invention, la borne comporte des moyens de régulation de la phase du signal dans son circuit oscillant par rapport à une valeur de référence, le temps de réponse de la régulation de phase étant inférieur à la période de la modulation d'amplitude et supérieur à la période du signal devant subir une démodulation de phase.

La présente invention prévoit également un transpondeur selon la revendication 7.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1 représente un transpondeur électromagnétique classique associé à une borne classique ;
les figures 2A et 2B sont des chronogrammes illustrant un exemple de transmission de données d'une borne vers un transpondeur ;
les figures 3A et 3B sont des chronogrammes illustrant la transmission de données d'un transpondeur vers une borne ;
les figures 4A à 4E sont des chronogrammes illustrant le problème posé par la démodulation de phase dans un procédé duplex ;
la figure 5 est un schéma-blocs illustrant le principe d'une borne selon l'invention ; et
la figure 6 est un schéma électrique détaillé d'un mode de réalisation d'une borne selon la présente invention.

Les mêmes éléments ont été désignés par les mêmes références aux différentes figures, et les figures ont été tracées sans respect d'échelle. Pour des raisons de clarté, seuls les éléments qui sont nécessaires à la compréhension de l'invention ont été représentés aux figures et seront décrits par la suite. En particulier, la structure d'un transpondeur n'a pas été détaillée de même que la structure des éléments de traitement des données numériques, côté borne de lecture. De plus, les chronogrammes des figures 2A à 4E ne sont pas tracés à l'échelle.

Le procédé selon l'invention s'applique à des systèmes à transpondeur , procédé dans lequel la modulation d'amplitude sera une modulation d'un taux inférieur à 100 %.

Un des problèmes posés par la mise en oeuvre d'un procédé bidirectionnel, réside dans le fait que chaque élément (transpondeur ou borne), perturbe par sa propre émission le décodage du signal reçu de l'autre élément (borne ou transpondeur).

On considérera ci-après, à titre d'exemple non-limitatif, de façon similaire à ce qui a été exposé précédemment en relation avec les figures 2A à 3B, que les transmissions d'une borne vers un transpondeur sont effectuées par modulation en amplitude d'une porteuse, et que les transmissions d'un transpondeur vers une borne sont effectuées par une atténuation par un moyen de rétromodulation et sont détectées à partir d'une démodulation de phase de la porteuse.

A titre d'exemple, on se ramène au cas décrit précédemment en relation avec la figure 1 dans lequel la rétromodulation est effectuée à l'aide d'un moyen résistif.

Ainsi, le transpondeur prélève, comme cela a été exposé précédemment, sur la porteuse modulée par la borne, l'énergie nécessaire à son fonctionnement, notamment l'énergie nécessaire d'une part à la commande du commutateur T par le microprocesseur µP 17 et, d'autre part, en effectuant une transmission simultanée, l'énergie dissipée pendant les périodes de fermeture du commutateur T par la mise dans le circuit de la résistance R. Un tel prélèvement peut conduire à de fausses lectures par le transpondeur, notamment pendant les périodes de fermeture du commutateur T. En effet, l'augmentation de charge correspondante du circuit oscillant (L2C2) du transpondeur par rapport au circuit oscillant (L1C1) de la borne provoque une atténuation du signal reçu qui fausse la démodulation. De fait, si on suppose qu'à partir d'un instant initial t0 le transpondeur commence à recevoir la séquence 1011 de l'exemple de la figure 2A, et que l'on suppose que pendant la transmission du premier bit (1) le transpondeur provoque la fermeture des commutateurs T, on observe une atténuation du premier bit (1) reçu. Une telle atténuation risque de fausser la discrimination entre le niveau d'un tel signal correspondant à une donnée "1" atténuée et le signal ultérieur atténuée en amplitude volontairement au niveau de la borne pour transmettre la donnée "0".

Côté borne, on assiste à un phénomène analogue de perversion possible du décodage du signal reçu du transpondeur par le signal qu'elle-même émet. Rappelons que la démodulation est dans cet exemple une démodulation de phase, effectué par le démodulateur 7 en comparant le signal reçu Rx à un signal de référence Ref fourni, de préférence, par l'oscillateur 5.

Plus précisément, le démodulateur 7 effectue la démodulation en générant un signal de modulation de largeur d'impulsions (PWM) de fréquence double du signal de référence et dont le rapport cyclique est fonction du déphasage. On notera que les signaux de référence et reçu (à démoduler) sont atténués à l'entrée du démodulateur de façon importante pour être compatibles avec des circuits logiques basse tension. On notera également que le démodulateur n'a pas pour objet de mesurer le déphasage - sa valeur absolue - mais uniquement de détecter l'existence d'une variation de phase pour reconstituer un signal à la fréquence de la sous-porteuse qui est alors décodé. Le démodulateur 7 est par exemple une porte logique OU-Exclusif.

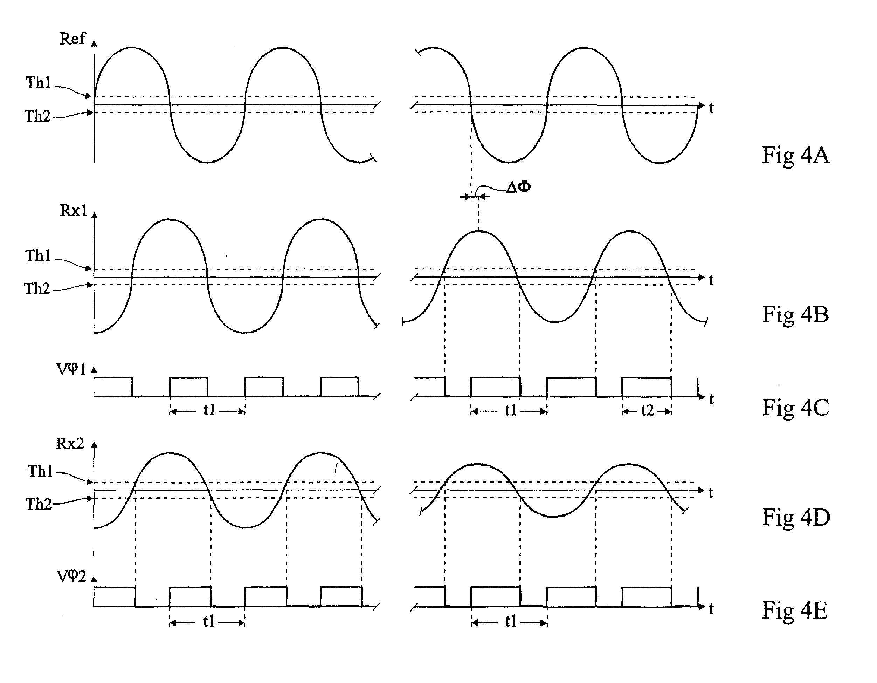

Les figures 4A à 4E illustrent un exemple d'une démodulation de données reçues du transpondeur par la borne, par exemple à l'aide d'une porte OU-Exclusif. Les allures des différents signaux sont représentés en absence - à gauche des figures - et en présence - à droite des figures - de la charge résistive R supplémentaire dans le circuit du transpondeur. En d'autres termes, les parties gauches des figures 4A à 4E correspondent à des périodes d'ouverture du commutateur T et leurs parties droites à des périodes de fermeture du commutateur T.

La figure 4A représente un exemple de signal de référence Ref, de préférence, sinusoïdal, à une fréquence de 13,56 MHz, prélevé au niveau de l'oscillateur 5, et constituant une première entrée de la porte OU-Exclusif. Bien entendu, un tel signal n'est pas affecté par la commande du moyen résistif de rétromodulation. Les parties gauche et droite de la figure 4A sont donc identiques.

La figure 4B illustre un premier exemple de signal Rx1 reçu du transpondeur par la borne. Le signal Rx1 est un signal rétromodulé par le transpondeur à partir de la porteuse non atténuée en amplitude. A l'entrée de la porte OU-Exclusif, comme l'illustre la figure 4B, le signal Rx1 est déphasé de 90° par rapport au signal de référence Ref par le dimensionnement des composants du circuit de façon à obtenir un rapport cyclique (rapport de la période à l'état haut sur la période du signal) de cinquante pour cent lorsque le commutateur T est ouvert.

Lorsque le commutateur T est fermé, comme on le comprendra mieux en comparant les parties gauche et droite de la figure 4B, au déphasage de base de 90° du signal Rx1 par rapport au signal Ref s'ajoute un déphasage Δφ correspondant à la modulation de phase introduite dans la sous-porteuse par le moyen de rétromodulation. Ce déphasage Δφ dure au moins pendant une demi-période de la sous-porteuse. On notera que pendant les périodes de fermeture du commutateur T, le signal Rx1 est en outre atténué par la charge résistive supplémentaire introduite.

On notera qu'en raison de cette atténuation, et sa période demeurant constante, le signal Rx1 présente des pentes différentes lors du passage par zéro suivant que le commutateur T est ouvert ou fermé. On rappelle qu'en raison des niveaux très importants, compris entre 10 et 30 volts, incompatibles avec des niveaux maximaux de 5 volts à l'entrée d'une porte logique, les signaux Ref et Rx1 sont atténués. Les effets de pente sont alors accentués.

La figure 4C illustre un exemple de signal de sortie Vφ1 de la porte OU-Exclusif. Le signal Vφ1 a été tracé à partir de la table de vérité d'une telle porte, et en comparant les signaux Ref et Rx1 tels qu'illustrés aux figures 4A et 4B.

Lorsque le commutateur T est ouvert, à gauche de la figure, le signal Vφ1 est un signal d'impulsions modulées en largeur d'un rapport cyclique de 50 %. Comme cela ressort clairement de la comparaison des figures 4A à 4C, les fronts montants du signal Vφ1 sont commandés par le passage à zéro du signal Ref et les fronts descendants par le passage à zéro du signal Rx1. Deux fronts montants sont donc séparés par un intervalle de temps t1 correspondant à une demi-période (environ 37 ns) de la porteuse fournie par l'oscillateur 5. L'intervalle de temps t2 séparant un front montant d'un front descendant correspond alors au déphasage entre deux passages par zéro des signaux Ref et Rx1, c'est-à-dire 90°, soit un quart de période (soit environ 13,5 ns).

Lorsque le commutateur T est fermé, à droite de la figure, le signal Vφ1 conserve l'allure générale décrite précédemment. Il présente des fronts montants lors des passages par zéro du signal Ref et des fronts descendants lors du passage par zéro du signal Rx1. Toutefois, en raison du déphasage Δφ, le rapport cyclique du signal est modifié.

Dans cette modification du rapport cyclique intervient également l'effet d'atténuation du signal Rx1 due à l'introduction de la charge résistive. En effet, la porte OU-Exclusif présente un seuil de commutation. En pratique, comme de nombreux discriminateurs, elle présente même une hystérésis de détection et par conséquent des seuils supérieur et inférieur Th1 et Th2 représentés en pointillés aux figures 4A, 4B et 4D. Ce n'est donc qu'après le passage en deçà du seuil Th2 que la porte OU-Exclusif détectera un passage décroissant par zéro du signal Rx1 et ce n'est qu'après le passage au-delà du seuil Th1 que la même porte détectera un passage croissant par zéro du signal Rx1. Les périodes des signaux Ref et Rx1 étant les mêmes, un tel effet d'hystérésis est identique sur chacun d'eux en absence d'atténuation. Toutefois, comme en pratique, le signal Rx1 est atténué lorsque le commutateur T est fermé, comme l'illustre la partie droite de la figure 4B, les seuils Th1 et Th2 doivent tenir compte de cette atténuation pour permettre la détection dans un fonctionnement classique. En effet, le signal Rx1 passera alors par les seuils Th1 et Th2 lorsqu'il croît et décroît, respectivement, plus tard que lorsque le commutateur T est ouvert.

Un tel phénomène d'hystérésis peut conduire à de fausses détections de déphasage (c'est-à-dire à la lecture de fausses données) comme cela sera expliqué ci-après en relation avec les figures 4D et 4E.

La figure 4D illustre un deuxième exemple de signal Rx2 reçu du transpondeur par la borne. Le signal Rx2 est un signal rétromodulé à partir d'une porteuse atténuée. Rappelons en effet que la borne, pour transmettre des données au transpondeur, effectue une modulation d'amplitude d'un taux de modulation inférieur à 100 %. Alors, comme l'illustre la figure 4D, même lorsque le commutateur T est ouvert, à gauche des figures, le signal Rx2 présente des courbures déformées par rapport au signal de référence (figure 4A). Cet effet est encore accentué, comme l'illustre la partie droite de la figure 4D lorsque le commutateur T est fermé par l'effet d'atténuation supplémentaire provoqué par la charge résistive. Comme précédemment, lorsque le commutateur T est ouvert, le signal Rx2 est déphasé de seulement 90° par rapport au signal de référence et lorsque le commutateur T est fermé, il apparaît un déphasage supplémentaire image de la rétromodulation.

La figure 4E illustre le signal de sortie Vφ2 du discriminateur obtenu par combinaison des signaux des figures 4A et 4D. La période du train d'impulsions obtenu, c'est-à-dire l'intervalle séparant deux fronts montants ou deux fronts descendants est toujours la demi-période t1 du signal de référence. Toutefois, le rapport cyclique du signal est différent de 50 % que le commutateur T soit fermé ou ouvert.

Lorsque le commutateur T est ouvert, compte tenu de l'effet d'accentuation à l'entrée du discriminateur de l'atténuation d'amplitude provenant de la transmission de données de la borne au transpondeur, le signal Rx2 passe maintenant par les seuils Th1 et Th2, respectivement, lorsqu'il croit et décroît, en retard par rapport au même signal non atténué tel qu'illustré en partie gauche de la figure 4B. Le discriminateur effectue donc une détection retardée du passage par zéro du signal Rx2, produisant donc un signal de sortie Vφ2 de rapport cyclique différent de 50 %.

Lorsque le commutateur T est fermé - à droite de la figure - le rapport cyclique du signal de sortie Vφ2 est encore modifié en raison du déphasage et de l'atténuation supplémentaire introduite par la charge résistive.

Le discriminateur est incapable de distinguer la modification de rapport cyclique, décrite en relation avec la figure 4E, partie gauche, correspondant seulement à une atténuation d'amplitude du signal reçu d'un signal reçu rétromodulé tel que décrit en relation avec les parties droites des figures 4B ou 4D.

En outre, tous ces phénomènes sont accrus par le fait que les seuils Th1 et Th2 ne sont pas forcément symétriques.

On remarquera que l'on a supposé précédemment que le signal de référence était prélevé directement au niveau de l'oscillateur 5. Toutefois, si le signal est prélevé après le modulateur, c'est-à-dire que l'on considère une image du signal Tx émis de la borne vers le transpondeur, de fausses détections peuvent également provenir de ce que le transpondeur rétromodule un signal non atténué en amplitude au moment où la borne atténue sa propre amplitude afin de transmettre des données au transpondeur. Dans ce cas, le discriminateur détectera que le signal reçu passe par zéro en avance sur le signal de référence et modifiera en conséquence son signal de sortie.

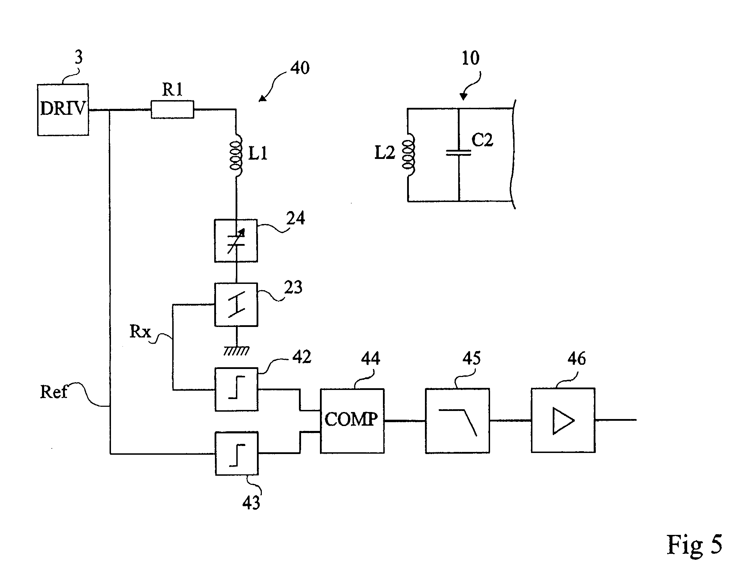

Pour pallier ces effets combinés d'atténuation-hystérésis au niveau du discriminateur, la présente invention propose la solution décrite ci-après en relation avec la figure 5.

La figure 5 illustre partiellement, sous forme de schéma-blocs, une partie d'une borne 40 selon l'invention, en coopération avec un transpondeur 10. La borne 40 selon l'invention s'organise, comme précédemment, autour d'un circuit résonant constitué d'un enroulement L1 et d'un élément capacitif 24. Le signal reçu est prélevé à la sortie de ce circuit L1, 24 au moyen d'un circuit 23 (par exemple, un transformateur d'intensité). Le signal Rx ainsi obtenu est envoyé en entrée d'un premier écrêteur 42. Un deuxième écrêteur 43 reçoit un signal de référence (en terme de déphasage) correspondant, par exemple, au signal délivré par l'oscillateur 5 ou le générateur 3. Les sorties respectives des écrêteurs 42 et 43 sont fournies à un discriminateur (ou comparateur) de phase 44 (COMP), par exemple, une porte OU-Exclusif, dont la sortie restitue un signal Vφ contenant l'indication du déphasage, donc de la rétromodulation. La sortie du discriminateur 44 est, de façon classique, envoyée sur un filtre passe-bas 45 (ou passe-bande centré sur la fréquence de la sous-porteuse) suivi d'un amplificateur de niveau 46 qui restitue les données démodulées.

Les signaux Rx et Ref étant écrêtés à la valeur maximale d'entrée du comparateur 44, les fausses détections liées à l'atténuation de ces signaux sont éliminées. En effet, au contraire d'une atténuation, un écrêtage ne modifie pas les formes des courbes, tout en limitant les niveaux d'entrée de façon satisfaisante. Les risques de fausse détection décrits précédemment en relation avec les figures 4A à 4E sont donc éliminés.

On notera que plus le taux de modulation d'amplitude est faible, plus les seuils des écrêteurs peuvent être proches de l'amplitude maximale du signal, et plus la démodulation de phase est facilitée, côté borne. Le taux de modulation doit cependant être compatible avec les performances du démodulateur d'amplitude, côté transpondeur et avec son besoin de téléalimentation. En pratique, on limitera ce taux à 50 %, de préférence à 10 %.

On notera également que l'élément capacitif 24 du circuit résonant de la borne 40 est de préférence variable. Cet élément est alors commandé par un système d'asservissement de la phase et de la porteuse. On préserve alors avantageusement une plage de fonctionnement étendue pour le système.

Le transpondeur 10 associé à la borne 40 présente, comme l'illustre partiellement la figure 5, une quelconque configuration connue, par exemple identique à un transpondeur 10 tel que décrit précédemment en relation avec la figure 1.

Toutefois, on prendra des précautions pour que la rétromodulation résistive ne perturbe pas la démodulation d'amplitude, par le transpondeur 10, du signal reçu de la borne 40.

Selon un premier exemple de réalisation de l'invention, on pourra adapter la valeur de la résistance R du moyen de rétromodulation et le seuil du démodulateur d'amplitude du transpondeur afin d'éviter que l'atténuation liée à l'introduction de la résistance R sur un signal de porteuse non atténuée ne soit confondue avec un signal atténué par la borne reçue alors que le commutateur T est ouvert. Dans cet exemple, l'influence de la rétromodulation résistive, c'est-à-dire l'atténuation provoquée par les fermetures périodiques de l'interrupteur T qui met la résistance R en parallèle avec le démodulateur (18, figure 1), doit être inférieure au seuil de démodulation de façon à ne pas être prise en compte.

Dans un deuxième exemple qui n'est pas selon l'invention, on paramètre le microprocesseur (µP 17, figure 1) de façon à ne démoduler le signal reçu que pendant les périodes d'ouverture (ou de fermeture) du commutateur T. De cette façon, on élimine les risques supplémentaires de fausse détection liés, comme cela a été exposé précédemment, à l'atténuation provoquée par l'insertion de la résistance R dans le circuit. On notera qu'une telle synchronisation peut être réalisé aisément attendu que le même microprocesseur assure la commande du démodulateur du signal reçu et du modulateur du signal émis. Une telle commande est rendue possible car la période de la sous porteuse est nettement inférieure à la durée de transmission d'un bit de la borne vers le transpondeur.

Un avantage de la présente invention est qu'elle permet la mise en oeuvre d'un procédé de transmission simultané (duplex).

Un autre avantage de la présente invention est que chacun des éléments - borne ou transpondeur - demeure utilisable, le cas échéant, pour mettre en oeuvre un procédé semi-duplex.

A titre de variante qui n'est pas selon l'invention, on pourra prévoir une rétromodulation par un moyen capacitif provoquant un léger désaccord des circuits oscillants par la modification de la capacité C2 du circuit résonant L2C2 du côté transpondeur. Un avantage d'une telle variante est qu'elle autorise l'emploi d'un détecteur moins sensible côté borne dans la mesure où la rétromodulation ne s'accompagne alors pas d'une atténuation et se répercute directement sur la phase.

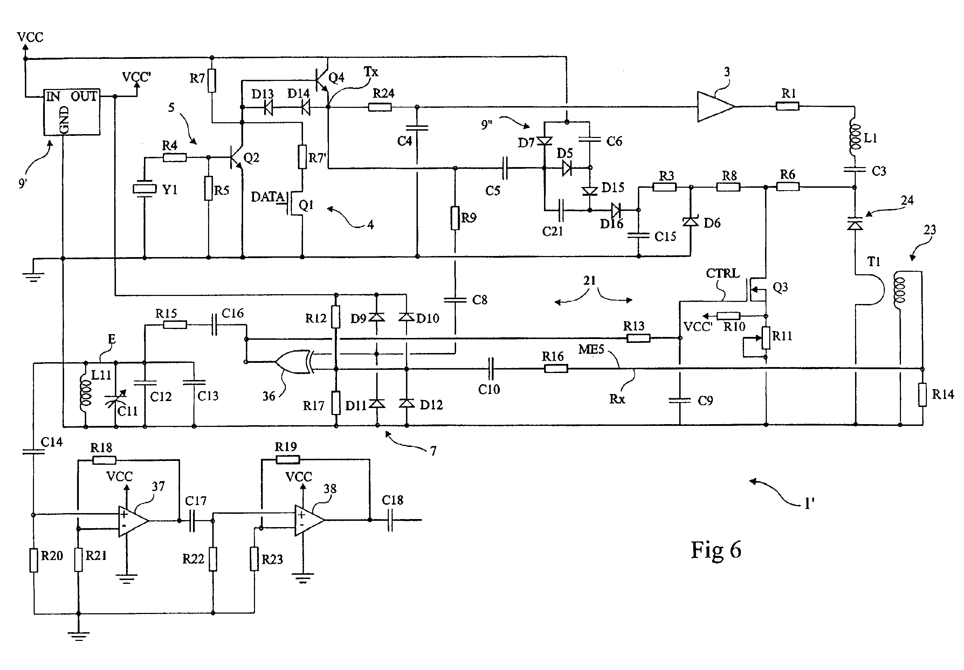

La figure 6 représente un schéma détaillé d'un mode de réalisation d'une borne 1' pourvue d'écrêteurs selon la présente invention. A la figure 6, tous les éléments constitutifs de la borne n'ont pas été représentés. En particulier, le circuit numérique (microprocesseur 6, figure 1) de traitement des données n'a pas été représenté. La figure 6 reprend, de façon plus détaillée, un exemple de réalisation des blocs illustrés aux figures 1 et 5. Toutefois, s'agissant d'un mode de réalisation pratique, certains de ces blocs se trouvent imbriqués ou partagent des composants communs avec un ou plusieurs autres blocs.

Dans l'exemple de la figure 6, on suppose que l'ensemble du circuit est alimenté au moyen d'une tension continue Vcc (par exemple de 12 volts), les moyens pour obtenir cette tension Vcc à partir du réseau électrique ou de tout autre source d'énergie n'étant pas représentés. Un régulateur de tension 9' est destiné à délivrer une tension plus faible que la tension Vcc, à savoir une tension Vcc' (par exemple, de l'ordre de 5 volts). Une borne d'entrée IN du régulateur 9' est connectée à la tension Vcc tandis qu'une borne de sortie OUT délivre la tension Vcc', la masse GND du régulateur 9' étant connectée à la ligne de masse du montage.

L'oscillateur 5 et le modulateur 4 représentés à la figure 1 sont, dans l'exemple de la figure 6, confondus en un circuit de base de temps associé à un préamplificateur, identifié globalement par les références 4 et 5. Ce circuit est basé sur l'utilisation d'un transistor bipolaire Q2 de type NPN dont l'émetteur est connecté à la masse et dont le collecteur est relié, par l'intermédiaire d'une résistance R7, à la tension Vcc. La base du transistor Q2 est connectée, par l'intermédiaire d'une résistance R4, à une première borne d'un quartz Y1 (par exemple, à 13,56 MHz) dont l'autre borne est connectée à la masse. Une résistance R5 est connectée entre la base du transistor Q2 et la masse. Un transistor bipolaire Q4 de type NPN a son collecteur connecté à la tension Vcc tandis que sa base est reliée au collecteur du transistor Q2 et, par l'intermédiaire de deux diodes D13 et D14 connectées en série, à l'émetteur du transistor Q4, les anodes respectives des diodes D13 et D14 étant côté émetteur du transistor Q4. Cet émetteur constitue le noeud du montage sur lequel est présent le signal Tx destiné à être amplifié et constituant, en l'absence d'une modulation, la porteuse de téléalimentation d'un transpondeur. Le circuit de modulation est constitué d'une résistance R7' en série avec un transistor Q1 (par exemple, un transistor MOS) entre le collecteur du transistor Q2 et la masse. La grille du transistor Q1 reçoit le signal numérique DATA des données éventuelles à transmettre. Le rapport entre les résistances R7 et R7' fixe le taux de modulation d'amplitude du système. Ainsi, pour un taux de modulation de 10 % tel qu'illustré par la figure 2, la résistance R7 est dix fois plus importante que la résistance R7'.

Le fonctionnement d'une base de temps associée à un préamplificateur tel qu'illustré par la figure 6 est parfaitement classique. Le signal Tx est envoyé, par l'intermédiaire d'une résistance R24, en entrée de l'amplificateur 3, un condensateur C4 étant connecté entre cette entrée et la masse. Le circuit R24-C4 optionnel minimise les perturbations que provoqueraient des variations trop rapides éventuelles de la tension du signal Tx.

Comme illustré par les figures 1 et 5, la sortie de l'amplificateur 3 attaque, par l'intermédiaire de la résistance R1, l'inductance L1 jouant le rôle d'antenne de la borne.

Dans l'exemple représenté à la figure 6, l'élément capacitif du circuit oscillant est constitué d'un condensateur C3 de valeur fixe en série avec une capacité variable 24 constituée, par exemple, d'une diode. La valeur de la capacité de la diode 24 est fixée par la tension à ses bornes. Cette tension est commandée par un transistor MOS Q3 dont le drain est relié, par l'intermédiaire d'une résistance R6, au point milieu entre le condensateur C3 et la diode 24. La source du transistor Q3 est connectée au point milieu d'un pont diviseur résistif entre la tension Vcc' et la masse, ce pont étant constitué d'une résistance R10 en série avec un potentiomètre R11. La grille du transistor Q3 reçoit le signal CTRL de régulation de phase.

Le potentiel du drain du transistor Q3 est fixé par un circuit 9" d'alimentation auxiliaire, destiné à générer une tension (par exemple, de l'ordre de 32 volts) supérieure à la tension Vcc. Ce circuit 9" est, dans l'exemple représenté à la figure 6, constitué d'une diode Zener D6 dont l'anode est connectée à la masse et dont la cathode est connectée à une première borne d'une résistance R8, dont la deuxième borne est connectée au drain du transistor Q3, et qui forme avec celui-ci un pont diviseur de tension dont le point milieu polarise, par l'intermédiaire de la résistance R6, l'élément 24. La cathode de la diode Zener D6 est également reliée, par l'intermédiaire d'une résistance R3 en série avec un condensateur C15, à la masse. Le point milieu de l'association en série de la résistance R3 avec le condensateur C15 est connecté à la cathode d'une diode D16 dont l'anode est connectée, par l'intermédiaire d'une diode D15 en série avec un condensateur C6, à la tension Vcc, l'anode de la diode D15 étant reliée au condensateur C6. L'anode de la diode D16 est également reliée par une deuxième branche inversée, c'est-à-dire constituée d'un condensateur C21 et d'une diode D7 en série, à la tension Vcc, la cathode de la diode D7 étant ici reliée au condensateur C21. Une diode D5 relie la cathode de la diode D7 à l'anode de la diode D15, l'anode de la diode D5 étant connectée à la cathode de la diode D7 et recevant, par l'intermédiaire d'un condensateur de découplage C5, le signal Tx. Le circuit 9" constitue un circuit d'alimentation auxiliaire commandé par les fronts respectifs du signal Tx, c'est-à-dire que le condensateur de stockage C15 ne reçoit de l'énergie que lorsqu'un signal Tx de téléalimentation est présent.

L'élément 23 de mesure du courant dans le circuit oscillant est ici, par exemple, constitué d'un transformateur d'intensité T1 dont l'enroulement primaire est connecté entre l'anode de la diode 24 et la masse. L'enroulement secondaire du transformateur T1 a une première borne connectée directement à la masse et l'autre borne connectée à la masse par l'intermédiaire d'une résistance R14 de conversion courant-tension. Le point milieu de l'association en série du deuxième enroulement du transformateur T1 avec la résistance R14 est connecté, par l'intermédiaire d'une résistance R16 en série avec un condensateur de découplage C10, à une première entrée d'une porte logique 36 de type OU-Exclusif faisant partie du démodulateur de phase 7.

La deuxième entrée de la porte 36 reçoit, par l'intermédiaire d'une résistance R9 en série avec un condensateur de découplage C8, le signal Tx constituant un signal de référence. La première entrée de la porte 36 est connectée au point milieu d'une association en série de résistances R12 et R17 entre la borne Vcc' et la masse et constitue un pont diviseur de fixation de la tension de mode commun (par exemple, à la valeur Vcc'/2 si R12=R17) du signal mesuré.

La porte 36 du démodulateur 7 est associée aux circuits écrêteurs (42, 43 figure 5). Ces circuits sont respectivement constitués de deux diodes D9, D10, D11, D12 associées deux à deux en série entre la tension Vcc' et la masse. Le point milieu de l'association en série de la diode D9 avec la diode D11 est connecté à une deuxième entrée de la porte 36. Le point milieu de l'association en série de la diode D10 avec la diode D12 est connecté à la première entrée de la porte 36 recevant la tension mesurée par le transformateur d'intensité. Les circuits écrêteurs permettent d'éviter de fausses détections, comme cela a été exposé précédemment, tout en permettant d'éviter qu'une quelconque des entrées de la porte 36 ne reçoive une tension supérieure à 5 volts.

La sortie de la porte 36 délivre un signal carré au double de la fréquence de la porteuse et dont le rapport cyclique est fonction du déphasage entre les signaux MES et Tx. Cette sortie est reliée, par l'intermédiaire d'une résistance R13, à la grille du transistor Q3. La cellule R13-C9 constitue un intégrateur délivrant le signal de commande CTRL de régulation de phase. Cette commande a pour effet de faire varier la tension aux bornes de la diode 24, donc sa capacité de jonction. La cellule R13-C9 intègre le signal de sortie de la porte 36 par rapport à la fréquence de la porteuse et sa constante de temps conditionne (avec la cellule R6-24) le temps de réponse de la boucle de régulation de phase.

On pourra tirer profit de la boucle de régulation de phase pour encore optimiser la démodulation. Pour ce faire, le temps de réponse de la boucle de régulation de phase est choisi pour être rapide devant le débit de transmission de données par modulation d'amplitude (106 kbits/s) et lent devant la période de la sous-porteuse (847,5 kHz), donc également devant la période de la porteuse (13,56 MHz). Ainsi, les variations de phase de la porteuse et les sauts de phase de la sous-porteuse liés à la rétromodulation sont trop rapides pour être pris en compte par la boucle de régulation et peuvent donc être décodés. Par contre, les variations parasites de phase liées à la modulation d'amplitude qui se produisent au rythme des changement d'amplitude sont prises en compte et la boucle de régulation rétablit alors le déphasage (statique) entre le signal Rx et le signal de référence à la valeur de base (90°).

L'amélioration dépend dans ce cas du gain de la boucle de phase. Plus ce gain est important, plus les déphasages parasites seront atténués. On veillera cependant à choisir un gain qui soit compatible avec la stabilité de la boucle pour éviter d'introduire une oscillation supplémentaire. Par exemple, on choisira un gain de l'ordre de 10 qui permet d'atténuer les perturbations liées à la modulation d'amplitude d'un facteur 10.

La première entrée de la porte 36 reçoit le signal de mesure MES qui, dans l'exemple de la figure 6, constitue également le signal Rx de rétromodulation éventuelle reçue par un transpondeur. Ainsi, le démodulateur de phase 7 fait également partie du comparateur 21 de la figure 4 et fait donc partie du système de régulation de phase.

La sortie de la porte 36 est, dans l'exemple de la figure 6, également envoyée en entrée d'un filtre, par exemple, passe-bande centré sur la fréquence de rétromodulation (par exemple, 847,5 kHz). Ce filtre est constitué de deux condensateurs C12 et C13 en parallèle avec un condensateur variable C11 et avec une inductance L11 entre la masse et une première borne d'une résistance R15, dont l'autre borne est reliée, par l'intermédiaire d'un condensateur de découplage C16, à la sortie de la porte 36. Le filtre passe-bande intègre le signal de sortie de la porte 36 et délivre un signal qui est une image du signal de commande du transistor T, côté transpondeur. La sortie du filtre (borne E) est reliée, par l'intermédiaire d'un condensateur C14 de découplage, à une entrée non-inverseuse d'un amplificateur 37 alimenté par la tension Vcc. Cette entrée non-inverseuse est également reliée à la masse par une résistance R20. L'entrée inverseuse de l'amplificateur 37 est connectée au point milieu d'une association en série d'une résistance R18 avec une résistance R21 entre la masse et la sortie de l'amplificateur 37. Cette sortie de l'amplificateur 37 est en outre reliée, par l'intermédiaire d'un condensateur de découplage C17, à une entrée non-inverseuse d'un amplificateur 38 monté de façon similaire, c'est-à-dire dont l'entrée non-inverseuse est reliée à la masse par l'intermédiaire d'une résistance R22, et dont l'entrée inverseuse est reliée au point milieu d'une association en série de résistances R19 et R23 entre la masse et la sortie de cet amplificateur 38. Cette sortie délivre, par l'intermédiaire d'un condensateur C18, le signal de données reçues à la fréquence de la sous-porteuse (847,5 kHz). Ce signal est ensuite décodé (par le décodeur 8 ou directement par le microprocesseur 6) pour restituer les données.

A titre de variante, on notera qu'un filtre passe-bas ayant une fréquence de coupure légèrement supérieure à la fréquence de la sous-porteuse aura également pour effet d'intégrer le signal de sortie de la porte 36 pour restituer une image de la rétromodulation. Le recours à un filtre passe-bande permet cependant d'éliminer également d'éventuelles fréquences parasites inférieures.

Les valeurs respectives des cellules RC R13-C9 et R6-24 sont, de préférence, choisies pour que la constante de temps de la boucle soit grande devant le rythme de la rétromodulation (847,5 kHz) et faible devant la vitesse de déplacement d'un transpondeur dans le champ de la borne. A titre de variante, on pourra choisir une valeur proche de la fréquence de la sous-porteuse. Dans ce cas, la résistance R13 pourra participer au filtrage passe-bande de démodulation, la borne E étant reliée entre la résistance R13 et le condensateur C9, la résistance R15 et le condensateur C16 étant supprimés.

Les deux composants réglables du circuit de la figure 6, à savoir la résistance R11 et le condensateur C11 servent respectivement à fixer la position choisie pour la phase et le centrage du filtre passe-bande du démodulateur 7 sur la fréquence de 847,5 kHz.

A titre d'exemple particulier de réalisation, un circuit tel qu'illustré par la figure 6 peut être réalisé avec, pour les résistances et condensateurs, les valeurs suivantes :
R1 = 18 ohms/1 watt ;
R3 = R20 = 10 kiloohms ;
R4 = 110 Ohms ;
R5 = 33 ohms ;
R6 = R8 = 100 kiloohms ;
R7 = R21 = R23 = 470 Ohms ;
R9 = R13 = R16 = 1 kiloohm ;
R10 = R14 = R15 = R22 = 2,2 kiloohms ;
R11 est un potentiomètre de 5 kiloohms ;
R12 = R17 = 15 kiloohms ;
R18 = R19 = 4,7 kiloohms ;
R24 = 220 ohms ;
R7' = 47 ohms ;
C3 = 1 nanofarad ;
C4 = C5 = C6 = C14 = C15 = C16 = C17 = C18 = C21 = 22 picofarads ;
C8 = C10 = C13 = 100 picofarads ;
C9 = 27 picofarads ;
C12 = 220 picofarads ;
C11 est une capacité variable de 5 à 60 picofarads ; et
L1 = 100 microhenry.

Bien entendu, la présente invention est susceptible de diverses variantes et modifications qui apparaîtront à l'homme de l'art. En particulier, les dimensionnements des composants constitutifs d'une borne selon l'invention sont à la portée de l'homme de l'art en fonction de l'application et, notamment, des fréquences utilisées et de la portée souhaitée. On notera que, s'agissant de signaux oscillants, l'information de phase du circuit oscillant pourra être lue aussi bien sur le courant que sur la tension.

De plus, d'autres moyens de détection du courant pourront être utilisés. Ainsi, tout élément permettant de convertir le courant dans le circuit oscillant en une tension à destination du démodulateur de phase (par exemple, une simple résistance ou shunt) pourront être utilisés à la place du transformateur d'intensité.

Parmi les applications de la présente invention, on signalera plus particulièrement les lecteurs (par exemple, les bornes ou portiques de contrôle d'accès, les distributeurs automatiques de produits, les terminaux d'ordinateurs, les terminaux téléphoniques, les téléviseurs ou décodeurs satellite, etc.) de cartes à puces sans contact (par exemple, les cartes d'identification pour contrôle d'accès, les cartes porte-monnaie électronique, les cartes de stockage d'information sur le possesseur de la carte, les cartes de fidélité de consommateurs, les cartes de télévisions à péage, etc.).

## Revendications

1. Procédé de transmission simultanée entre une borne (40, 1') et un transpondeur (10) comprenant chacun un circuit oscillant (L1C1, 24, L2C2), un moyen de modulation (4, 19) et un moyen de démodulation (7, 18), le procédé comprenant
une transmission dans le sens borne vers transpondeur effectuée en modulation d'amplitude avec un taux de modulation (tm) inférieur à 100% ; **caractérisé en ce que** :
un signal (Rx) transmis du transpondeur vers la borne est écrêté par la borne avant démodulation de phase par le moyen de démodulation (7); et que
l'atténuation introduite par un moyen de rétromodulation (T,R) côté transpondeur est inférieure au seuil de démodulation du moyen de démodulation (18) du transpondeur.

2. Procédé selon la revendication 1, **caractérisé en ce que** le taux de modulation (tm) est inférieur à 50 %.

3. Procédé selon l'une quelconque des revendications 1 ou 2, **caractérisé en ce qu'**il consiste, côté borne (40, 1'), à écrêter un signal de référence de la démodulation de phase.

4. Système de transmission entre une borne (40, 1') et un transpondeur électromagnétique (10), **caractérisé en ce que** la borne et le transpondeur comportent des moyens adaptés à la mise en oeuvre du procédé selon l'une quelconque des revendications 1 à 3.

5. Borne adaptée à un système conforme à la revendication 4, comportant un moyen de comparaison (44) de signaux émis et reçus écrêtés par des moyens d'écrêtage respectifs (42, 43).

6. Borne selon la revendication 5, **caractérisée en ce qu'**elle comporte des moyens de régulation de la phase du signal dans son circuit oscillant par rapport à une valeur de référence, le temps de réponse de la régulation de phase étant inférieur à la période de la modulation d'amplitude et supérieur à la période du signal devant subir une démodulation de phase.

7. Transpondeur adapté à un système selon la revendication 4.

8. Transpondeur selon la revendication 7, dans lequel un moyen de démodulation (18) en amplitude a un seuil de démodulation supérieur à l'atténuation provoquée par le moyen de rétromodulation.

## Claims

1. A method of simultaneous transmission between a terminal (40, 1') and a transponder (10), each including an oscillating circuit (L1C1, 24, L2C2), a modulation means (4, 19) and a demodulation means (7, 18), the method comprising:
an amplitude-modulated transmission transmitted from the terminal to the transponder with an amplitude modulation rate (tm) is smaller than 100%; **characterized in that:**
a signal (Rx) transmitted from the transponder to the terminal is clipped by the terminal before phase demodulation by the demodulation means (7); and **in that**
the attenuation introduced by a back modulation means (T, R) on the transponder side is lower than the demodulation threshold of the demodulation means (18) of the transponder.

2. The method of claim 1, wherein the modulation rate (tm) is smaller than 50%.

3. The method of claim 1 or 2, **characterized in that** it consists, on the terminal side (40, 1'), of clipping a reference signal of the phase demodulation.

4. A system of transmission between a terminal (40, 1') and an electromagnetic transponder (10), **characterized in that** the terminal and the transponder comprise means adapted for implementing the method of any of claims 1 to 3.

5. A terminal adapted to a system according to claim 4, including means (44) for comparing transmitted and received signals clipped by respective clipping means (42, 43).

6. The terminal of claim 5, **characterized in that** it includes means for regulating the signal phase in its oscillating circuit with respect to a reference value, the response time of the phase regulation being shorter than the amplitude modulation period and longer than the period of the signal that will have to undergo a phase demodulation.

7. A transponder adapted to a system according to claim 4.

8. A transponder according to claim 7, wherein the amplitude demodulation means (18), has a demodulation threshold greater than the attenuation caused by the back modulation means.

## Patentansprüche

1. Ein Verfahren zur gleichzeitigen Übertragung zwischen einem Terminal (40, 1'), und einem Transponder (10), die jeweils eine Schwingschaltung (L1C1, 24, L2C2), Modulationsmittel (4, 19) und Demodulationsmittel (7, 18) beinhalten, wobei das Verfahren Folgendes aufweist:
eine amplitudenmodulierte Übertragung, die von dem Terminal an den Transponder mit einer Amplitudenmodulationsrate (tm), die kleiner als 100% ist, gesendet bzw. übertragen wird; **dadurch gekennzeichnet dass**:
ein Signal (Rx), das von dem Transponder an das Terminal gesendet wird, durch das Terminal abgeschnitten bzw. begrenzt (clipped) wird, und zwar vor der Phasendemodulation durch die Demodulationsmittel (7); und **dadurch** dass
die Dämpfung, die durch Rückmodulationsmittel (T, R) auf der Transponderseite eingeführt wird, niedriger ist als die Demodulationsschwelle von den Demodulationsmitteln (18) von dem Transponder.

2. Verfahren nach Anspruch 1, wobei die Modulationsrate (tm) kleiner als 50 % ist.

3. Verfahren nach Anspruch 1 oder 2, **dadurch gekennzeichnet, dass** es auf der Terminalseite (40, 1') besteht aus dem Abschneiden (clipping) eines Referenzsignals von der Phasendemodulation.

4. Ein System zur Übertragung zwischen einem Terminal (40, 1') und einem elektromagnetischen Transponder (10), **dadurch gekennzeichnet, dass** das Terminal und der Transponder Mittel aufweisen, die angepasst sind zum Implementieren des Verfahrens nach irgendeinem der Ansprüche 1 bis 3.

5. Ein Terminal, das angepasst ist an ein System gemäß Anspruch 4, Mittel (44) zum Vergleichen gesendeter und empfangener Signale, die durch entsprechende Begrenzungsmittel (42, 43) begrenzt bzw. abgeschnitten (clipped) sind, beinhaltet.

6. Terminal nach Anspruch 5, **dadurch gekennzeichnet, dass** es Mittel aufweist zum Regeln der Signalphase in seiner Schwingschaltung mit Bezug auf einen Referenzwert, wobei die Antwortzeit von der Phasenregulation kürzer ist als die Amplitudenmodulationsperiode und länger ist als die Periode von dem Signal, das einer Phasendemodulation ausgesetzt ist.

7. Ein Transponder, der angepasst ist an ein System gemäß Anspruch 4.

8. Ein Transponder gemäß Anspruch 7, wobei die Amplitudendemodulationsmittel (18) eine Demodulationsschwelle besitzen, die größer ist als die Dämpfung, die durch die Rückmodulationsmittel bewirkt wird.
